# EUROPEAN PATENT APPLICATION

(11) **EP 4 842 077 A1**
(43) Date of publication of application: **18.11.2026**
(21) Application number: 24916078.9
(22) Date of filing: 12.01.2024
(51) Int. Cl.: H04W 52/02, H04L 5/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); FU, Zhe, Dongguan, Guangdong 523860 (CN); LENG, Bingxue, Dongguan, Guangdong 523860 (CN); YU, Xinlei, Dongguan, Guangdong 523860 (CN)
(74) Representative: Taor, Simon Edward William
(86) International application number: PCT/CN2024/072018
(87) International publication number: WO 2025/148009

(57) **Abstract**

A wireless communication method, a terminal device, and a network device are provided. The method includes the following. A terminal device sends first signaling to a first network device, where the first signaling is used for triggering the first network device to send a first synchronization signal block (SSB). By introducing the first signaling for triggering a network device to perform SSB transmission, it is conducive to realizing on-demand SSB transmission, thereby facilitating network energy saving (NES).

## Description

### TECHNICAL FIELD

The disclosure relates to the field of communication technology, and more particularly, to a wireless communication method, a terminal device, and a network device.

### BACKGROUND

To support network energy saving (NES), in the related art, on-demand synchronization signal block (SSB) transmission is proposed. However, there is currently no specific scheme for implementing on-demand SSB transmission.

### SUMMARY

The disclosure provides a wireless communication method, a terminal device, and a network device. Various aspects involved in the disclosure are described below.

In a first aspect, a wireless communication method is provided. The method includes the following. A terminal device sends first signaling to a first network device, where the first signaling is used for triggering the first network device to send a first synchronization signal block (SSB).

In a second aspect, a wireless communication method is provided. The method includes the following. A first network device receives first signaling sent by a terminal device, where the first signaling is used for triggering the first network device to send a first SSB.

In a third aspect, a wireless communication method is provided. The method includes the following. A second network device sends configuration information to a terminal device, where the configuration information is used for configuring the terminal device to send first signaling to a first network device, and the first signaling is used for triggering the first network device to send a first SSB.

In a fourth aspect, a terminal device is provided. The terminal device includes a communication unit. The communication unit is configured to send first signaling to a first network device, where the first signaling is used for triggering the first network device to send a first SSB.

In a fifth aspect, a network device is provided. The network device is a first network device. The network device includes a communication unit. The communication unit is configured to receive first signaling sent by a terminal device, where the first signaling is used for triggering the first network device to send a first SSB.

In a sixth aspect, a network device is provided. The network device is a second network device. The network device includes a communication unit. The communication unit is configured to send configuration information to a terminal device, where the configuration information is used for configuring the terminal device to send first signaling to a first network device, and the first signaling is used for triggering the first network device to send a first SSB.

In a seventh aspect, a terminal device is provided. The terminal device includes a transceiver, a memory, and a processor. The memory is used to store programs. The processor is configured to invoke the programs from the memory and control the transceiver to perform signal reception and transmission, to cause a communication device to perform the method according to the first aspect.

In an eighth aspect, a network device is provided. The network device includes a transceiver, a memory, and a processor. The memory is used to store programs. The processor is configured to invoke the programs from the memory and control the transceiver to perform signal reception and transmission, to cause a communication device to perform the method according to the second aspect or the third aspect.

In a ninth aspect, an apparatus is provided. The apparatus includes a processor. The processor configured to invoke programs from a memory, to cause the apparatus to perform the method according to any of the first aspect to the third aspect.

In a tenth aspect, a chip is provided. The chip includes a processor. The processor configured to invoke programs from a memory, to cause a device equipped with the chip to perform the method according to any of the first aspect to the third aspect.

In an eleventh aspect, a computer-readable storage medium is provided. The computer-readable storage medium is configured to store programs which are operable with a computer to perform the method according to one of the first aspect to the third aspect.

In a twelfth aspect, a computer program product is provided. The computer program product includes programs which are operable with a computer to perform the method according to any of the first aspect to the third aspect.

In a thirteenth aspect, a computer program is provided. The computer program is operable with a computer to perform the method according to any of the first aspect to the third aspect.

In embodiments of the disclosure, by introducing the first signaling for triggering a network device to perform SSB transmission, it is conducive to realizing on-demand SSB transmission, thereby facilitating network energy saving (NES).

### BRIEF DESCRIPTION OF THE DRAWINGS

FIG. 1 is an exemplary architectural diagram of a wireless communication system to which embodiments of the disclosure can be applied.
FIG. 2 is a schematic flowchart of a wireless communication method provided in an embodiment of the disclosure.
FIG. 3 is a schematic flowchart of a wireless communication method provided in another embodiment of the disclosure.
FIG. 4 is a schematic flowchart of a wireless communication method provided in another embodiment of the disclosure.
FIG. 5 is a schematic flowchart of a wireless communication method provided in another embodiment of the disclosure.
FIG. 6 is a schematic structural diagram of a terminal device provided in embodiments of the disclosure.
FIG. 7 is a schematic structural diagram of a first network device provided in embodiments of the disclosure.
FIG. 8 is a schematic structural diagram of a second network device provided in embodiments of the disclosure.
FIG. 9 is a schematic diagram of an apparatus to which embodiments of the disclosure can be applied.

### DETAILED DESCRIPTION

Technical solutions in the disclosure will be described below with reference to the accompanying drawings.

### Wireless communication system

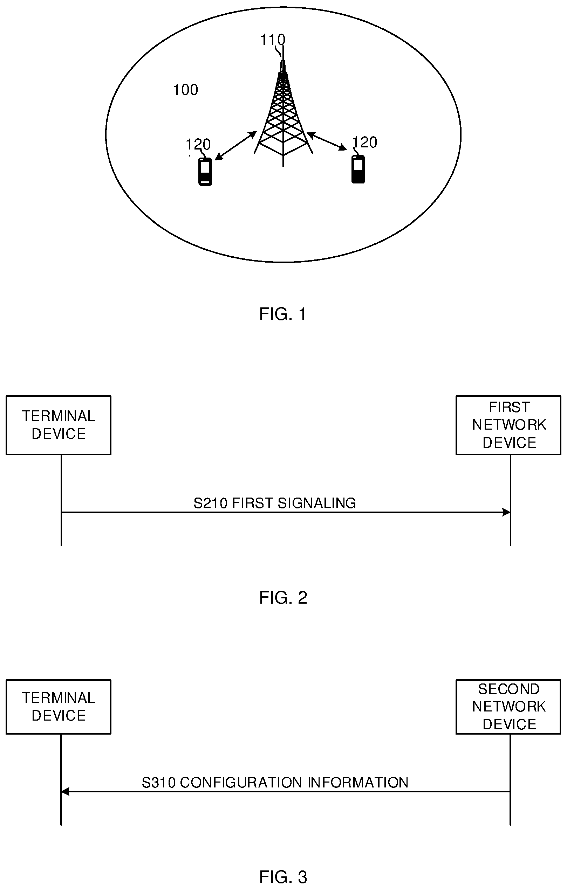

FIG. 1 is an exemplary architectural diagram of a wireless communication system 100 to which embodiments of the disclosure can be applied. The wireless communication system 100 can include a network device 110 and a terminal device 120. The network device 110 can be a device for communicating with the terminal device 120. The network device 110 can provide a network coverage for a specific geographic area, and can communicate with the terminal device 120 located in the coverage area. The terminal device 120 can access a network (such as a wireless network) via the network device 110. Optionally, the wireless communication system 100 can further include other network entities such as a network controller, a mobility management entity (MME), etc., and embodiments of the disclosure are not limited in this regard.

It should be understood that, the technical solutions of embodiments of the disclosure can be applied to various communication systems, for example: a fifth-generation (5G) system or new radio (NR), a long term evolution (LTE) system, an LTE frequency division duplex (FDD) system, an LTE time division duplex (TDD), etc. The technical solutions provided in the disclosure can also be applied to a future communication system, such as a sixth-generation mobile communication system, or a satellite communication system, and so on.

The terminal device in the embodiments of the disclosure can also be referred to as as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user device, etc. The terminal device in embodiments of the disclosure can be a device for providing voice and/or data connectivity to a user, and can be used to connect people, things and machines, for example, a device with wireless connection functions such as a handheld device, an in-vehicle device, etc. The terminal device in embodiments of the disclosure can be a mobile phone, a tablet computer (Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the terminal device can act as a base station. For example, the terminal device can act as a scheduling entity for providing sidelink (SL) signals between terminal devices in vehicle to everything (V2X) or device to device (D2D), etc. For instance, a cellular phone and an automobile communicate with each other by using sidelink signals. Communication between a cellular phone and a smart home device is performed without relaying communication signals via a base station.

The network device in embodiments of the disclosure can be a device for communicating with a terminal device. The network device can be, for example, an access-network device or a radio access network (RAN) device. For example, the network device can be a base station. A base station can broadly cover various names as follows, or be replaced with the following names: NodeB, evolved NodeB (eNB), next generation NodeB (gNB), relay station, access point (AP), transmitting and receiving point (TRP), transmitting point (TP), home base station, network controller, access node, wireless node, AP, transmission node, transceiver node, base band unit (BBU), remote radio unit (RRU), active antenna unit (AAU), remote radio head (RRH), central unit (CU), distributed unit (DU), positioning node, etc. The base station can be a macro base station, a micro base station, a relay node, a donor node, or the like, or a combination thereof.

### Application scenario of communication system

Currently, an application scenario of a communication system (such as 5G) mainly includes enhanced mobile broadband (eMBB), ultra-reliable low-latency communication (URLLC), and massive machine-type communication (mMTC).

eMBB can be used for a user to access multimedia content, services, and data, and demand for eMBB is growing rapidly. In addition, since eMBB may be deployed in different scenarios, such as indoor spaces, urban areas, rural areas, etc., capabilities and requirements of eMBB vary greatly.

URLLC can be applied to industrial automation, power automation, telemedicine operation (surgery), traffic safety guarantee, etc. mMTC is typically characterized by high connection density, small data volume, latency-insensitive services, low costs and long service life of modules, etc.

### Radio resource control (RRC) states and mobility management

Currently, three RRC states of a terminal device, namely an RRC_CONNECTED state, an RRC_IDLE state, and an RRC_INACTIVE state, are defined in a protocol.

The RRC_CONNECTED state can refer to a state of the terminal device after completing a random access procedure and before performing RRC release. There is an RRC connection between the terminal device and a network device (e.g., an access-network device). In the RRC_CONNECTED state, the terminal device can perform data transmission with the network device, such as downlink (DL) data transmission and/or uplink (UL) data transmission. Alternatively, the terminal device can perform transmission of a terminal device-specific data channel and/or a terminal device-specific control channel with the network device to transmit specific information or unicast information for the terminal device.

In the RRC_CONNECTED state, the network device can determine cell-level location information of the terminal device, that is, the network device can determine a cell that the terminal device belongs to. In the RRC_CONNECTED state, after the terminal device moves, for example, moves from one cell to another cell, the network device can control the terminal device to perform cell handover. As can be seen, mobility management of the terminal device in the RRC_CONNECTED state can include cell handover. In addition, mobility management of the terminal device in the RRC_CONNECTED state can be controlled by the network device, and accordingly, the terminal device can hand over to a designated cell according to a command issued by the network device.

The RRC_IDLE state refers to a state in which a terminal device camps on a cell but has not yet performed random access. The terminal device typically enters the RRC_IDLE state after the terminal device is powered on or after RRC release. In the RRC_IDLE state, there is no RRC connection between the terminal device and the network device (e.g., the network device camped on), context of the terminal device is not stored in the network device, and no connection for the terminal device is established between the network device and a core network (CN). If the terminal device needs to enter the RRC_CONNECTED state from the RRC_IDLE state, the terminal device needs to initiate an RRC connection setup procedure.

In the RRC_IDLE state, the CN can send a paging message to the terminal device, that is, a paging procedure can be triggered by the CN. Optionally, a paging area can also be configured by the CN. In some cases, for a terminal device in the RRC_IDLE state, after the terminal device moves (e.g., moves from one cell to another cell), the terminal device can initiate a cell reselection procedure. In other cases, for a terminal device in the RRC_IDLE state, if the terminal device needs to access a cell, the terminal device can initiate a cell selection procedure. That is, mobility management of the terminal device in the RRC_IDLE state can include cell reselection and/or cell selection.

The RRC_INACTIVE state is a state defined to reduce air interface signaling, quickly restore radio connection, and quickly restore data services. The RRC_INACTIVE state is a state between the connected state and the idle state. The terminal device has already entered the RRC_CONNECTED state, and then released RRC connection with the network device, but the context of the terminal device is stored in the network device. In addition, connection for the terminal device established between the network device and the CN is not released, that is, a user-plane bearer and a control-plane bearer between a RAN and the CN are still maintained, i.e., there is a CN-NR connection.

In the RRC_INACTIVE state, the RAN can send a paging message to the terminal device, that is, the paging procedure can be triggered by the RAN. A RAN-based paging area is managed by the RAN, and the network device can know the location of the terminal device that is of a RAN-based paging area level.

In some cases, for a terminal device in the RRC_INACTIVE state, after the terminal device moves (e.g., moves from one cell to another cell), the terminal device can initiate a cell reselection procedure. In other cases, for a terminal device in the RRC_INACTIVE state, if the terminal device needs to access a cell, the terminal device can initiate a cell selection procedure. That is, mobility management of the terminal device in the RRC_INACTIVE state can include cell reselection and/or cell selection.

### 5G network energy saving (NES) project

Energy consumption has become an important part in operational cost savings. According to a report from global system for mobile communications association (GSMA), energy cost on mobile networks accounts for about 23% of the total operator cost. Most of energy consumption comes from a RAN, especially from an AAU, while data centers and fiber transport account for only a smaller share.

Energy consumption is classified into two types: dynamic part, such as energy consumption during data transmission/reception; and static part, such as energy consumption for maintaining necessary operations of a radio access device (even if data transmission/reception is not on-going).

The project shall not only evaluate potential network energy consumption, but also evaluate and balance impact on network performance and impact on user performance. For example, the project shall not have a particularly large impact on some key performance indicators (KPI). The KPIs mentioned here include spectral efficiency, capacity, user perceived throughput (UPT), latency, terminal-device power consumption, complexity, handover performance, call drop rate, initial access performance, etc. Possible research directions of the project include specifying procedures and signaling method(s) to support on-demand synchronization signal block (SSB) secondary cell (SCell) operation for a terminal device in connected mode configured with carrier aggregation (CA, for both intra-/inter-band CA).

### SSB-less Cell

In the related art, an SCell may not transmit an SSB, provided that the SCell is co-located with a special cell (sPcell) or another intra-frequency SCell. If a terminal device has already synchronized with another cell, and the cell is co-located with an SSB-less cell, then the terminal device can communicate on the SSB-less cell. Assuming that cell *A* and cell *B* (SCell) are co-located, and cell *B* is an SSB-less cell, then the terminal device can obtain an SSB from cell *A* in order for communication on cell *B*, while SSB transmission is never required on cell *B*. In release 18 (R18), in the NES project, the above scheme is extended to inter-frequency scenarios from intra-frequency scenarios, i.e., for an SSB-less cell, an SSB can be obtained from other cells on an inter-frequency band.

In R19, an SSB-less cell can operate as an independent non-collocated cell. However, if the SSB-less cell is not co-located with other cells, the terminal device cannot obtain an SSB from other cells. In this case, SSB transmission needs to be performed on the SSB-less cell itself. However, for the purpose of NES, SSB transmission shall not be performed all the time, but shall be performed on demand. How to design such a transmission mechanism is a problem to be solved in embodiments of the disclosure.

In view of the above problem, it is proposed in embodiments of the disclosure that a terminal device sends a trigger signal (first signaling) to a network device to trigger the network device to perform SSB transmission. Via the terminal device, the network device can know whether SSB transmission is needed, thereby realizing on-demand SSB transmission.

Embodiments of the disclosure will be described in detail below with reference to FIG. 2.

FIG. 2 is a schematic flowchart of a wireless communication method provided in embodiments of the disclosure. Referring to FIG. 2, in step S210, a terminal device sends first signaling to a first network device, where the first signaling is used for triggering the first network device to send a first SSB.

In some implementations, embodiments of the disclosure can be applied to a CA scenario. The first network device can be understood as a network device where an SCell for the terminal device is located. Therefore, the terminal device can send the first signaling to the first network device as follows: the terminal device sends the first signaling to the SCell.

The first signaling can also be referred to as a trigger signal or trigger signaling. In some implementations, the first signaling can be carried in an uplink wake up signal (UL-WUS). Alternatively, in some implementations, the first signaling can be replaced by a reference signal, and a sequence of the reference signal indicates or triggers the first network device to send the first SSB.

The terminal device can trigger the first signaling according to demands of the terminal device itself. For example, if the terminal device wants to communicate with the first network device but has not received an SSB from the first network device, the terminal device can actively send the first signaling to the first network device.

Alternatively, in some implementations, the first signaling can be triggered on a certain condition. For example, the first signaling can be triggered based on second signaling.

The second signaling can be existing signaling. An advantage of using existing signaling is that there is no need to design new trigger signaling, thereby reducing implementation complexity.

For example, the second signaling can be SCell activation signaling. Exemplarily, the second signaling can be a medium access control control element (MAC CE).

For another example, the second signaling can be signaling for layer 1 (L1) measurement of the first network device.

For another example, the second signaling can be signaling for layer 3 (L3) measurement of the first network device.

For another example, the second signaling can be signaling for L1 measurement on a frequency where the first network device is located.

For another example, the second signaling can be signaling for L3 measurement on a frequency where the first network device is located.

The second signaling can also be new signaling. For example, the second signaling can be downlink control information (DCI), a MAC CE, or RRC signaling. An advantage of designing new trigger signaling is that the terminal device can trigger in advance the first network device to perform SSB transmission, instead of waiting for triggering the first network device to perform SSB transmission until activation signaling for the first network device is sent or measurement on the first network device is performed, thereby reducing delay.

In addition to triggering transmission of the first signaling based on the second signaling, in some implementations, transmission of the first signaling can also be triggered based on a reference signal. For example, the reference signal can include a special sequence, and transmission of the first signaling can be triggered based on the special sequence. By triggering the first signaling based on a reference signal, it is possible to save signaling overhead of a communication system.

The transmission of the first signaling described above can be configured via configuration information. The configuration information can be configured by a second network device. For example, referring to step S310 in FIG. 3, the terminal device receives configuration information sent by the second network device, where the configuration information is used to configure the terminal device to send the first signaling to the first network device. It should be understood that, step S310 in FIG. 3 can be performed before step S210 in FIG. 2. Alternatively, embodiments illustrated in FIG. 3 can be implemented independently, and does not have to be combined with embodiments illustrated in FIG. 2. For example, after the configuration information is received, the terminal device does not have to perform step S210.

It should be noted that, embodiments of the disclosure do not specifically limit the forms of the first network device (or referred to as a first network) and the second network device (or referred to as a second network). For example, the first network device and the second network device each can be a distributed unit (DU), and the two DUs can be connected via a centralized unit (CU). For another example, the first network device and the second network device each can be a "DU+CU". In this case, the first network device and the second network device can be directly connected to each other, or can be connected via another network element (such as an access and mobility management function (AMF)).

In some implementations, the first network device can correspond to a first carrier set and the second network device can correspond to a second carrier set. The first carrier set can include at least one carrier. The second carrier set can include at least one carrier. The first carrier set and the second carrier set can include different carriers.

In some implementations, the first network device can also be referred to as a first cell. The first cell can be, for example, an SCell.

In some implementations, the first network device can also be referred to as a first base station. The first base station can be, for example, a secondary base station.

In some implementations, the second network device can also be referred to as a second cell. The second cell can be, for example, a primary cell.

In some implementations, the second network device can also be referred to as a second base station. The second base station can be, for example, a master base station.

The configuration information sent to the terminal device by the second network device can be configuration information that has been transmitted in advance between the first network device and the second network device. Alternatively, the configuration information can be configuration information that has been transmitted in advance between the first network device, a third network device, and the second network device. For example, the second network device can receive the configuration information from the first network device. For another example, the second network device can send the configuration information to the first network device.

The content of the configuration information is described in detail below. It should be understood that, the configuration information can include one or more of first information to fourth information described below.

In some implementations, the configuration information can include first information. The first information can indicate the frequency where the first network device is located. The first information can also be referred to as frequency-related information for the first network device. The first information can include, for example, one or more of a point-A frequency location, a frequency offset, or a bandwidth for the first network device. Since the first network device has not yet sent an SSB, the terminal device may not know a frequency where the first signaling is to be sent and a frequency at which an SSB signal sent by the first network device is to be searched for. Therefore, by introducing the first information in the configuration information, it is conducive to transmission of the first signaling.

In some implementations, the configuration information can include second information. The second information can indicate a resource for the first signaling. Since the terminal device needs to send the first signaling to the first network device, the resource for the first signaling can be configured for the terminal device. The resource for the first signaling can be understood as a resource for the first network device to carry the first signaling. The resource for the first signaling can include one or more of: a time-frequency resource, a preamble resource, or a sequence resource. Since an SSB(s) from the first network device is sent in different directions, the terminal device may only need to activate an SSB(s) in one or a limited number of directions. In order to select an SSB direction, a correspondence between the resource for the first signaling and the SSB direction can be established. The second information mentioned above can indicate the correspondence.

In some implementations, the configuration information can include third information. The third information indicates a time offset between the first network device and the second network device. Therefore, the third information can also be referred to as time offset information between the first network device and the second network device. The third information can include one or more of: a system frame number (SFN) offset between the first network device and the second network device, a slot offset between the first network device and the second network device, or a symbol offset between the first network device and the second network device. Alternatively, the third information can indicate a time-domain resource location for the first signaling determined based on timing of the second network device (or with reference to timing of the second network device). Since the terminal device may not have timing information of the first network device, by configuring the third information, the terminal device can determine, according to the timing of the second network device, a time for sending the first signaling.

In some implementations, the configuration information can include fourth information. The fourth information indicates a resource-selection mode for the first signaling. Therefore, the fourth information can also be referred to as resource-selection information for the first signaling. As mentioned above, the SSB from the first network device is sent in different directions, and therefore the terminal device may only need to activate SSB transmission(s) in one or a limited number of directions. In order to select an SSB transmission direction, the first network device can establish a correspondence between the resource for the first signaling and the SSB direction. In this case, the fourth information can be used to configure how to select an appropriate resource from resources corresponding to various SSB directions to send the first signaling.

Further, in some implementations, the fourth information indicates a second resource-selection mode. In the second resource-selection mode, the resource for the first signaling (such as a time-frequency resource, a preamble resource, and/or a sequence resource for the first signaling) is selected based on a measurement value of a second target signal(s) sent by the second network device. The second target signal mentioned herein can include an SSB and/or a channel state information reference signal (CSI-RS). The measurement value herein can be, for example, one or more of: a reference signal received power (RSRP), a reference signal received quality (RSRQ), a signal to interference plus noise ratio (SINR), etc. Before the first network device sends an SSB, the terminal device may be unable to measure a signal quality from the first network device, and therefore the terminal device can firstly select an appropriate resource based on the SSB and/or the CSI-RS from the second network device.

In the second resource-selection mode, the resource for the first signaling can be selected based on one or more of: a signal with the highest measurement value among second target signals, or the measurement value of the second target signal and a threshold of the measurement value. For example, the terminal device can select the resource for the first signaling based on an SSB (or CSI-RS) with the highest measurement value from the second network device (for instance, a resource corresponding to the SSB with the highest measurement value among resources configured via the second information is determined as the resource for the first signaling). For another example, the terminal device can select the resource for the first signaling based on an SSB (or CSI-RS) whose measurement value is higher than a threshold from the second network device (for instance, a resource corresponding to a 1^{st} SSB whose measurement value is higher than a threshold among resources configured via the second information is determined as the resource for the first signaling).

Alternatively, in some implementations, the fourth information indicates a first resource-selection mode. In the first resource-selection mode, the resource for the first signaling (such as a time-frequency resource, a preamble resource, and/or a sequence resource for the first signaling) is selected based on a measurement value of a first target signal(s) sent by the first network device. The first target signal herein can include an SSB and/or a CSI-RS. The measurement value mentioned herein can be, for example, one or more of: an RSRP, an RSRQ, an SINR, etc. The first resource-selection mode can be applied to a case where the terminal device has already camped on the first network device and activated an SSB(s) in one or more directions from the first network device. Assuming that the terminal device wants to leave a direction corresponding to the activated SSB (e.g., the signal quality in the direction corresponding to the activated SSB is poor), then the terminal device may want to activate other SSB directions from the first network device. In this case, the terminal device has already obtained timing of the first network device, and therefore can select the resource for the first signaling with reference to the signal quality in the activated SSB direction, and as such, the resource for the first signaling thus determined may be more accurate.

In the first resource-selection mode, the resource for the first signaling can be selected based on the measurement value of the first target signal and a threshold of the measurement value. For example, the terminal device can select the resource for the first signaling based on a first target signal whose measurement value is lower than or equal to threshold 1. For another example, the terminal device can select the resource for the first signaling based on a signal whose measurement value is lower than or equal to threshold 1 and a signal whose measurement value higher than or equal to threshold 2 among first target signals.

After the terminal device sends the first signaling, the first network device may send the first SSB, or an abnormal case (e.g., failure of reception of the first signaling) may occur and thus the first SSB is not sent. In order to handle this abnormal case, in embodiments of the disclosure, a first timer is introduced for the terminal device. The first timer can be, for example, configured by a network device.

In some implementations, the first timer can be started in response to transmission of the first signaling.

In some implementations, the first timer can be stopped in response to receiving the first SSB by the terminal device.

After the first timer is stopped, in some implementations, the terminal device can send first indication information to the second network device, where the first indication information indicates that activation of the first SSB is successful. As can be seen, with introduction of the first timer, it is conducive for the second network device to know that SSB transmission of the first network device is successful.

If the first timer expires, it may indicate the abnormal case mentioned above occurred. In this case, the terminal device performs one or more of: sending second indication information to the second network device, where the second indication information indicates that activation of the first SSB failed; deactivating the first network device; or releasing configuration information for L1/L3 measurement on the first network device or the frequency where the first network device is located. With introduction of the expiration handling mechanism for the first timer, it helps the second network device to know failure of SSB transmission of the first network device, and prevents the terminal device from activating related configuration for the first network device as usual for the case where SSB transmission of the first network device fails. The terminal device can determine transmission of the second indication information to the second network device based on a logical channel prioritization (LCP) procedure. For example, during the LCP procedure, if an UL resource is an UL resource corresponding to the second network device or an UL resource corresponding to a frequency where the second network device is located, the terminal device contains the second indication information in a MAC PDU.

In some implementations, the terminal device can start an SCell deactivation timer if the first SSB is received, thereby avoiding frequent activation/deactivation of the first network device that results from starting the SCell deactivation timer too early.

Transmission of the first signaling is described in detail above. In some cases, the terminal device may want the first network device to stop transmission of one or more SSBs (i.e., deactivate the one or more SSBs). Embodiments of the disclosure further provide a mechanism for triggering the first network device to stop SSB transmission. It should be understood that, triggering of the first network device to stop SSB transmission and triggering of the first network device to perform SSB transmission described above can be implemented in combination or implemented independently of each other. That is, embodiments described below can be independent embodiments, and does not need to be premised on the embodiment described earlier. The mechanism for triggering the first network device to stop SSB transmission is described in detail below.

In some implementations, the terminal device sends third signaling (which can be referred to as a bye message) to the first network device. The third signaling is used for triggering the first network device to stop transmission of one or more SSBs.

In other implementations, the terminal device sends a reference signal to the first network device. The reference signal is used for triggering the first network device to stop transmission of one or more SSBs. For example, the reference signal can adopt a special sequence design, and based on such sequence, the first network device can be triggered to stop transmission of one or more SSBs.

The third signaling or the reference signal mentioned above can be triggered based on a certain condition. The condition can be, for example, reception of fourth signaling or reception of another reference signal. If the third signaling or the reference signal is to be triggered by the fourth signaling, the fourth signaling can be sent by the first network device or by the second network device.

In some implementations, the fourth signaling can be existing signaling. An advantage of using existing signaling is that there is no need to design new signaling, thereby simplifying implementation.

For example, the fourth signaling is SCell deactivation signaling. The signaling can be a MAC CE (i.e., SCell deactivation MAC CE).

For another example, the fourth signaling is signaling for canceling L1 measurement of the first network device.

For another example, the fourth signaling is signaling for canceling L3 measurement of the first network device.

For another example, the fourth signaling is signaling for canceling L1 measurement on the frequency where the first network device is located.

For another example, the fourth signaling is signaling for canceling L3 measurement on the frequency where the first network device is located.

In other implementations, the fourth signaling can be new signaling. For example, the fourth signaling is DCI, a MAC CE, or RRC signaling. An advantage of designing new trigger signaling is that the terminal device does not need to wait for triggering transmission of the third signaling until a trigger condition for existing signaling is satisfied, thereby reducing delay.

In addition to triggering the third signaling or the reference signal (used to trigger the first network device to stop transmission of one or more SSBs) based on signaling, the third signaling or the reference signal can also be triggered based on the measurement value of the first target signal sent by the first network device. The first target signal herein can include an SSB and/or a CSI-RS. The measurement value herein can be, for example, one or more of an RSRP, an RSRQ, an SINR, etc.

The terminal device has already camped on the first network device and obtained timing of the first network device, and one or more SSBs from the first network device are in an activated state. Therefore, the terminal device can trigger the third signaling or the reference signal with reference to the signal quality from the first network device. For example, the third signaling can be triggered when one or more of the following are satisfied: the measurement value of the first target signal is less than or equal to a first threshold, or the measurement value of the first target signal is greater than or equal to a second threshold.

The content and/or carrying mode of the third signaling are described in detail below.

In some implementations, the third signaling can be uplink control information (UCI), a MAC CE, or RRC signaling. If the third signaling is a MAC CE or RRC signaling, the terminal device can determine transmission of the third signaling to the first network device based on an LCP procedure. For example, during the LCP procedure, if an UL resource is an UL resource corresponding to the first network device or an UL resource corresponding to the frequency where the first network device is located, the terminal device contains the third signaling in a MAC protocol data unit (PDU) to ensure that the third signaling is sent only to the first network device.

Alternatively, the third signaling can also contain fifth information (or the third signaling is replaced by the fifth information). The fifth information indicates a length of an SCell deactivation timer. For example, if the terminal device finds that the first network device has performed SSB transmission and the terminal device is configured with the SCell deactivation timer, the terminal device can send the length of the SCell deactivation timer to the first network device. The first network device can determine, based on the length of the SCell deactivation timer, whether to stop SSB transmission. For example, if the first network device determines that the terminal device has not performed data transmission for a period exceeding the length of the SCell deactivation timer, the first network device can stop SSB transmission. From the perspective of the terminal device, by sending the fifth information (indicating the length of the SCell deactivation timer), the terminal device indirectly triggers the first network device to stop SSB transmission.

The third signaling can be simple trigger signaling, or can indicate an SSB that is to be deactivated. The third signaling can explicitly indicate the SSB that is to be deactivated (e.g., containing an index(es) of one or more SSBs). Alternatively, the third signaling can implicitly indicate the SSB that is to be deactivated. For example, the third signaling is carried on a resource(s) associated with one or more SSBs (which can include one or more of a time-frequency resource, a preamble, or a sequence), thereby indirectly indicating to the first network device to deactivate the one or more SSBs.

In some implementations, the mechanism for stopping SSB transmission can further include the terminal device stopping or resetting the first timer described above and/or the terminal device stopping transmission of the first signaling, so as to cancel the on-going action of SSB activation.

It should be noted that, in embodiments of the disclosure, the signaling mentioned above can also be referred to as a signal or information if there is no conflict.

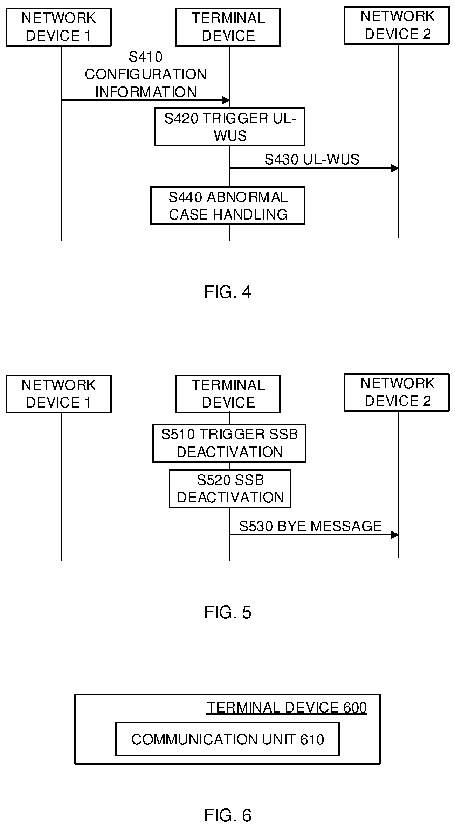

Embodiments of the disclosure are described in further detail below in conjunction with specific examples. In the examples below, network device 1 corresponds to the second network device mentioned above, and network device 2 corresponds to the first network device mentioned above. It should be noted that, the examples in FIG. 4 to FIG. 5 are merely intended to help those skilled in the art understand embodiments of the disclosure, rather than limit embodiments of the disclosure to specific values or specific scenarios illustrated. Those skilled in the art can apparently make various equivalent modifications or changes based on the examples illustrated in FIG. 4 to FIG. 5, and such modifications or changes also fall within the scope of embodiments of the disclosure.

Referring to FIG. 4, in step S410, network device 1 sends configuration information to a terminal device, where the configuration information is used to configure the terminal device to send an UL-WUS to network device 2. For details of the configuration information, reference can be made to the elaborations above, which are not repeated herein.

In step S420, the terminal device triggers the UL-WUS. For example, the terminal device can trigger the UL-WUS based on SCell activation signaling or signaling for L1/L3 measurement on network device 2 or a frequency where network device 2 is located. The terminal device can also trigger the UL-WUS based on newly designed trigger signaling.

In step S430, the terminal device sends the UL-WUS to network device 2.

In step S440, the terminal device starts a first timer to handle an abnormal case. For elaborations of the first timer, reference can be made to the foregoing illustration, which is not repeated herein.

Referring to FIG. 5, in step S510, a terminal device triggers SSB deactivation. For example, the terminal device can trigger SSB deactivation based on SCell deactivation signaling or signaling for canceling L1/L3 measurement on network device 2 or a frequency where network device 2 is located. The terminal device can also trigger SSB deactivation based on newly designed trigger signaling.

In step S520, the terminal device performs SSB deactivation. For example, the terminal device can stop the first timer mentioned above. For another example, the terminal device can stop UL-WUS transmission.

In step S530, the terminal device sends a bye message to network device 2. After the bye message is received, network device 2 can stop transmission of one or more SSBs.

The method embodiments of the disclosure have been described in detail above with reference to FIG. 1 to FIG. 5, and the apparatus embodiments of the disclosure will be described in detail below with reference to FIG. 6 to FIG. 9. It should be understood that, the illustration of the method embodiments corresponds to the illustration of the apparatus embodiments, and therefore, for parts not described in detail, reference can be made to the foregoing method embodiments.

FIG. 6 is a schematic structural diagram of a terminal device provided in embodiments of the disclosure. The terminal device 600 illustrated in FIG. 6 can include a communication unit 610. The communication unit 610 is configured to send first signaling to a first network device, where the first signaling is used for triggering the first network device to send a first SSB.

In some implementations, the first signaling is triggered based on second signaling or a first reference signal.

In some implementations, the second signaling includes one or more of: SCell activation signaling; or signaling for L1/L3 measurement on the first network device or a frequency where the first network device is located.

In some implementations, the second signaling is DCI, a MAC CE, or RRC signaling.

In some implementations, the first signaling is carried in a WUS.

In some implementations, the communication unit 610 is further configured to: receive configuration information sent by a second network device before the terminal device sends the first signaling to the first network device, where the configuration information is used to configure the terminal device to send the first signaling to the first network device.

In some implementations, the configuration information includes one or more of: first information indicating the frequency where the first network device is located; second information indicating a resource for the first signaling; third information indicating a time offset between the first network device and the second network device; or fourth information indicating a resource-selection mode for the first signaling.

In some implementations, the resource for the first signaling includes one or more of: a time-frequency resource, a preamble, or a sequence.

In some implementations, the third information includes one or more of: an SFN offset between the first network device and the second network device; a slot offset between the first network device and the second network device; a symbol offset between the first network device and the second network device; or a time-domain resource location for the first signaling determined based on timing of the second network device.

In some implementations, the fourth information indicates a first resource-selection mode, where in the first resource-selection mode, the resource for the first signaling is selected based on a measurement value of a first target signal sent by the first network device, and the first target signal includes an SSB and/or a CSI-RS.

In some implementations, in the first resource-selection mode, the resource for the first signaling is selected based on the measurement value of the first target signal and a threshold of the measurement value.

In some implementations, the fourth information indicates a second resource-selection mode, where in the second resource-selection mode, the resource for the first signaling is selected based on a measurement value of a second target signal sent by the second network device, and the second target signal includes an SSB and/or a CSI-RS.

In some implementations, in the second resource-selection mode, the resource for the first signaling is selected based on one or more of: a signal with the highest measurement value among second target signals; or the measurement value of the second target signal and a threshold of the measurement value.

In some implementations, the terminal device 600 further includes a starting/stopping unit. The starting/stopping unit is configured to: start a first timer in response to transmission of the first signaling; and/or stop the first timer in response to reception of the first SSB.

In some implementations, the communication unit 610 is further configured to: send first indication information to the second network device if the first timer is stopped, where the first indication information indicates that activation of the first SSB is successful.

In some implementations, the terminal device 600 further includes an executing unit. The executing unit is configured to perform one or more of the following if the first timer expires: sending second indication information to the second network device, where the second indication information indicates that activation of the first SSB failed; deactivating the first network device; or releasing configuration information for L1/L3 measurement on the first network device or the frequency where the first network device is located.

In some implementations, transmission of the second indication information to the second network device is determined by the terminal device based on an LCP procedure.

In some implementations, the terminal device further includes a first processing unit. The first processing unit is configured to: during the LCP procedure, if an UL resource is an UL resource corresponding to the second network device or an UL resource corresponding to a frequency where the second network device is located, contain the second indication information in a MAC PDU.

In some implementations, the terminal device 600 further includes a starting unit. The starting unit is configured to start an SCell deactivation timer in response to receiving the first SSB.

In some implementations, the communication unit 610 is further configured to: send third signaling or a second reference signal to the first network device, where the third signaling or the second reference signal is used for triggering the first network device to stop transmission of one or more SSBs.

In some implementations, the third signaling or the second reference signal is triggered based on fourth signaling or a third reference signal.

In some implementations, the fourth signaling is one of: SCell deactivation signaling; or signaling for canceling L1/L3 measurement on the first network device or the frequency where the first network device is located.

In some implementations, the fourth signaling is DCI, a MAC CE, or RRC signaling.

In some implementations, the fourth signaling is sent by the first network device or the second network device.

In some implementations, the third signaling or the second reference signal is triggered based on the measurement value of the first target signal sent by the first network device, and the first target signal includes an SSB and/or a CSI-RS.

In some implementations, the third signaling is triggered if one or more of the following are satisfied: the measurement value of the first target signal is less than or equal to a first threshold; or the measurement value of the first target signal is greater than or equal to a second threshold.

In some implementations, the third signaling is UCI, a MAC CE, or RRC signaling.

In some implementations, the third signaling is a MAC CE or RRC signaling, and transmission of the third signaling to the first network device is determined by the terminal device based on an LCP procedure.

In some implementations, the terminal device 600 includes a second processing unit. The second processing unit is configured to: during the LCP procedure, if an UL resource is an UL resource corresponding to the first network device or an UL resource corresponding to the frequency where the first network device is located, contain the third signaling in a MAC PDU.

In some implementations, the third signaling contains fifth information, and the fifth information indicates a length of an SCell deactivation timer.

In some implementations, the third signaling contains an index of the one or more SSBs.

In some implementations, the third signaling is carried on a resource associated with the one or more SSBs.

In some implementations, the resource associated with the one or more SSBs includes one or more of: a time-frequency resource, a preamble, or a sequence.

In some implementations, the method further includes an executing unit. The executing unit is configured to perform one or more of: stopping or resetting the first timer, where the first timer is related to SSB activation of the first network device; or stopping transmission of the first signaling.

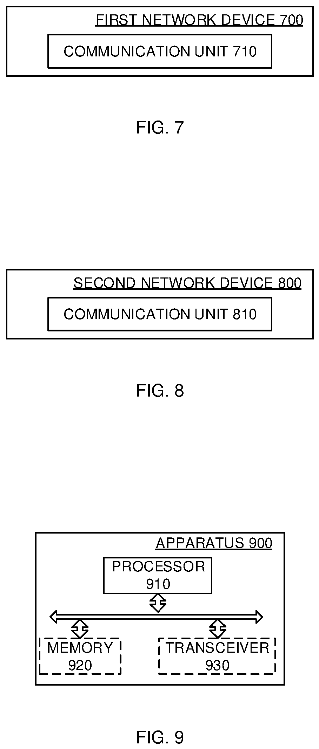

FIG. 7 is a schematic structural diagram of a network device provided in embodiments of the disclosure. The network device 700 illustrated in FIG. 7 can be the first network device mentioned above. The network device 700 can include a communication unit 710. The communication unit 710 is configured to receive first signaling sent by a terminal device, where the first signaling is used for triggering the first network device to send a first SSB.

In some implementations, the first signaling is triggered based on second signaling or a first reference signal.

In some implementations, the second signaling includes one or more of: SCell activation signaling; or signaling for L1/L3 measurement on the first network device or a frequency where the first network device is located.

In some implementations, the second signaling is DCI, a MAC CE, or RRC signaling.

In some implementations, the first signaling is carried in a WUS.

In some implementations, the communication unit 710 is further configured to: send configuration information to a second network device; or receive configuration information sent by the second network device, where the configuration information is used to configure the terminal device to send the first signaling to the first network device.

In some implementations, the configuration information includes one or more of: first information indicating the frequency where the first network device is located; second information indicating a resource for the first signaling; third information indicating a time offset between the first network device and the second network device; or fourth information indicating a resource-selection mode for the first signaling.

In some implementations, the resource for the first signaling includes one or more of: a time-frequency resource, a preamble, or a sequence.

In some implementations, the third information includes one or more of: an SFN offset between the first network device and the second network device; a slot offset between the first network device and the second network device; a symbol offset between the first network device and the second network device; or a time-domain resource location for the first signaling determined based on timing of the second network device.

In some implementations, the fourth information indicates a first resource-selection mode, where in the first resource-selection mode, the resource for the first signaling is selected based on a measurement value of a first target signal sent by the first network device, and the first target signal includes an SSB and/or a CSI-RS.

In some implementations, in the first resource-selection mode, the resource for the first signaling is selected based on the measurement value of the first target signal and a threshold of the measurement value.

In some implementations, the fourth information indicates a second resource-selection mode, where in the second resource-selection mode, the resource for the first signaling is selected based on a measurement value of a second target signal sent by the second network device, and the second target signal includes an SSB and/or a CSI-RS.

In some implementations, in the second resource-selection mode, the resource for the first signaling is selected based on one or more of: a signal with the highest measurement value among second target signals; or the measurement value of the second target signal and a threshold of the measurement value.

In some implementations, the communication unit 710 is further configured to: receive third signaling or a second reference signal sent by the terminal device, where the third signaling or the second reference signal is used for triggering the first network device to stop transmission of one or more SSBs.

In some implementations, the third signaling or the second reference signal is triggered based on fourth signaling or a third reference signal.

In some implementations, the fourth signaling is one of: SCell deactivation signaling; or signaling for canceling L1/L3 measurement on the first network device or the frequency where the first network device is located.

In some implementations, the fourth signaling is DCI, a MAC CE, or RRC signaling.

In some implementations, the fourth signaling is sent by the first network device or the second network device.

In some implementations, the third signaling or the second reference signal is triggered based on the measurement value of the first target signal sent by the first network device, and the first target signal includes an SSB and/or a CSI-RS.

In some implementations, the third signaling is UCI, a MAC CE, or RRC signaling.

In some implementations, the third signaling contains fifth information, and the fifth information indicates a length of an SCell deactivation timer.

In some implementations, the communication unit 710 is further configured to: stop transmission of one or more SSBs if the SCell deactivation timer expires.

In some implementations, the third signaling contains an index of the one or more SSBs.

In some implementations, the third signaling is carried on a resource associated with the one or more SSBs.

In some implementations, the resource associated with the one or more SSBs includes one or more of: a time-frequency resource, a preamble, or a sequence.

FIG. 8 is a schematic structural diagram of a network device provided in embodiments of the disclosure. The network device 800 illustrated in FIG. 8 can be the second network device mentioned above. The network device 800 can include a communication unit 810. The communication unit 810 is configured to send configuration information to a terminal device, where the configuration information is used to configure the terminal device to send first signaling to a first network device, and the first signaling is used for triggering the first network device to send a first SSB.

In some implementations, the configuration information includes one or more of: first information indicating the frequency where the first network device is located; second information indicating a resource for the first signaling; third information indicating a time offset between the first network device and the second network device; or fourth information indicating a resource-selection mode for the first signaling.

In some implementations, the resource for the first signaling includes one or more of: a time-frequency resource, a preamble, or a sequence.

In some implementations, the third information includes one or more of: an SFN offset between the first network device and the second network device; a slot offset between the first network device and the second network device; a symbol offset between the first network device and the second network device; or a time-domain resource location for the first signaling determined based on timing of the second network device.

In some implementations, the fourth information indicates a first resource-selection mode, where in the first resource-selection mode, the resource for the first signaling is selected based on a measurement value of a first target signal sent by the first network device, and the first target signal includes an SSB and/or a CSI-RS.

In some implementations, in the first resource-selection mode, the resource for the first signaling is selected based on the measurement value of the first target signal and a threshold of the measurement value.

In some implementations, the fourth information indicates a second resource-selection mode, where in the second resource-selection mode, the resource for the first signaling is selected based on a measurement value of a second target signal sent by the second network device, and the second target signal includes an SSB and/or a CSI-RS.

In some implementations, in the second resource-selection mode, the resource for the first signaling is selected based on one or more of: a signal with the highest measurement value among second target signals; or the measurement value of the second target signal and a threshold of the measurement value.

In some implementations, the first signaling is carried in a WUS.

In some implementations, the communication unit 810 is further configured to: send the configuration information to the second network device; or receive the configuration information sent by the second network device.

In some implementations, the communication unit 810 is further configured to: receive first indication information or second indication information sent by the terminal device, where the first indication information indicates that activation of the first SSB is successful, and the second indication information indicates that activation of the first SSB failed.

In some implementations, the communication unit 810 is further configured to: send fourth signaling to the terminal device, where the fourth signaling is used for triggering the terminal device to send third signaling or a second reference signal, and the third signaling or the second reference signal is used for triggering the first network device to stop transmission of one or more SSBs.

FIG. 9 is a schematic structural diagram of a communication apparatus to which embodiments of the disclosure can be applied. The dashed lines in FIG. 9 indicate that the unit or module is optional. The apparatus 900 can be used to implement the methods described in the above method embodiments. The apparatus 900 can be a chip, a terminal device, or a network device.

The apparatus 900 can include one or more processors 910. The processor 910 can support the apparatus 900 in implementing the methods described in the foregoing method embodiments. The processor 910 can be a general-purpose processor or a special-purpose processor. For example, the processor can be a central processing unit (CPU). Alternatively, the processor can be other general-purpose processors, digital signal processors (DSPs), application specific integrated circuits (ASICs), field programmable gate arrays (FPGAs) or other programmable logic devices, discrete gate or transistor logic devices, discrete hardware components, etc. A general-purpose processor can be a microprocessor, or the processor can be any conventional processor, etc.

The apparatus 900 can further include one or more memories 920. The memory 920 is configured to store programs. The programs can be executed by the processor 910, so that the processor 910 performs the methods described in the foregoing method embodiments. The memory 920 can be independent of the processor 910 or integrated into the processor 910.

The apparatus 900 can further include a transceiver 930. The processor 910 can communicate with other devices or chips via the transceiver 930. For example, the processor 910 can send and receive data with other devices or chips via the transceiver 930.

Embodiments of the disclosure further provide a computer-readable storage medium. The computer-readable storage medium is configured to store programs. The computer-readable storage medium can be applied to the terminal device, the first network device, or the second network device provided in embodiments of the disclosure, and the programs are operable with a computer to perform the method performed by the terminal device, the method performed by the first network device, or the method performed by the second network device in various embodiments of the disclosure.

Embodiments of the disclosure further provide a computer program product. The computer program product includes programs. The computer program product can be applied to the terminal device, the first network device, or the second network device provided in embodiments of the disclosure, and the programs are operable with a computer to perform the method performed by the terminal device, the method performed by the first network device, or the method performed by the second network device in various embodiments of the disclosure.

Embodiments of the disclosure further provide a computer program. The computer program can be applied to the terminal device, the first network device, or the second network device provided in embodiments of the disclosure, and the computer program is operable with a computer to perform the method performed by the terminal device, the method performed by the first network device, or the method performed by the second network device in various embodiments of the disclosure.

It should be understood that, the terms "system" and "network" herein are usually used interchangeably throughout this disclosure. In addition, terms used in the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

"Indication" referred to in embodiments of the disclosure can be a direct indication, can be an indirect indication, or can mean that there is an association. For example, *A* indicates *B* can mean that *A* directly indicates *B*, for instance, *B* can be obtained according to *A*; may mean that *A* indirectly indicates *B*, for instance, *A* indicates *C*, and *B* can be obtained according to *C*; or can mean that that there is an association between *A* and *B*.

According to embodiments of the disclosure, "*B* corresponding to *A*" means that *B* is associated with *A*, and *B* can be determined according to *A*. However, "*B* can be determined according to *A*" does not mean that *B* can only be determined according to *A*, and instead, *B* can be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-storing a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

The term "and/or" in embodiments of the disclosure only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
sending, by a terminal device, first signaling to a first network device, wherein the first signaling is used for triggering the first network device to send a first synchronization signal block (SSB).

2. The method of claim 1, wherein the first signaling is triggered based on second signaling or a first reference signal.

3. The method of claim 2, wherein the second signaling comprises one or more of:
secondary cell (SCell) activation signaling; or
signaling for layer 1 (L1)/layer 3 (L3) measurement on the first network device or a frequency where the first network device is located.

4. The method of claim 2, wherein the second signaling is downlink control information (DCI), a medium access control control element (MAC CE), or radio resource control (RRC) signaling.

5. The method of any of claims 1 to 4, wherein the first signaling is carried in a wake-up signal (WUS).

6. The method of any of claims 1 to 5, wherein before sending, by the terminal device, the first signaling to the first network device, the method further comprises:
receiving, by the terminal device, configuration information sent by a second network device, wherein the configuration information is used to configure the terminal device to send the first signaling to the first network device.

7. The method of claim 6, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

8. The method of claim 7, wherein the resource for the first signaling comprises one or more of: a time-frequency resource, a preamble, or a sequence.

9. The method of claim 7 or 8, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

10. The method of any of claims 7 to 9, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

11. The method of claim 10, wherein in the first resource-selection mode, the resource for the first signaling is selected based on the measurement value of the first target signal and a threshold of the measurement value.

12. The method of any of claims 7 to 11, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

13. The method of claim 12, wherein in the second resource-selection mode, the resource for the first signaling is selected based on one or more of:
a signal with the highest measurement value among second target signals; or
the measurement value of the second target signal and a threshold of the measurement value.

14. The method of any of claims 1 to 13, further comprising:
starting, by the terminal device, a first timer in response to transmission of the first signaling; and/or
stopping, by the terminal device, the first timer in response to reception of the first SSB.

15. The method of claim 14, further comprising:
sending, by the terminal device, first indication information to the second network device in response to the first timer being stopped, wherein the first indication information indicates that activation of the first SSB is successful.

16. The method of claim 14, further comprising:
performing, by the terminal device, one or more of the following in response to expiration of the first timer:
sending second indication information to the second network device, wherein the second indication information indicates that activation of the first SSB failed;
deactivating the first network device; or
releasing configuration information for L1/L3 measurement on the first network device or the frequency where the first network device is located.

17. The method of claim 16, wherein transmission of the second indication information to the second network device is determined by the terminal device based on a logical channel prioritization (LCP) procedure.

18. The method of claim 17, further comprising:
during the LCP procedure, when an uplink (UL) resource is an UL resource corresponding to the second network device or an UL resource corresponding to a frequency where the second network device is located, containing, by the terminal device, the second indication information in a MAC protocol data unit (MAC PDU).

19. The method of any of claims 1 to 18, further comprising:
starting, by the terminal device, an SCell deactivation timer in response to receiving the first SSB.

20. The method of any of claims 1 to 19, further comprising:
sending, by the terminal device, third signaling or a second reference signal to the first network device, wherein the third signaling or the second reference signal is used for triggering the first network device to stop transmission of one or more SSBs.

21. The method of claim 20, wherein the third signaling or the second reference signal is triggered based on fourth signaling or a third reference signal.

22. The method of claim 21, wherein the fourth signaling is one of:
SCell deactivation signaling; or
signaling for canceling L1/L3 measurement on the first network device or the frequency where the first network device is located.

23. The method of claim 21, wherein the fourth signaling is DCI, a MAC CE, or RRC signaling.

24. The method of claim 23, wherein the fourth signaling is sent by the first network device or the second network device.

25. The method of claim 20, wherein the third signaling or the second reference signal is triggered based on the measurement value of the first target signal sent by the first network device, and the first target signal comprises an SSB and/or a CSI-RS.

26. The method of claim 25, wherein the third signaling is triggered when one or more of the following are satisfied:
the measurement value of the first target signal is less than or equal to a first threshold; or
the measurement value of the first target signal is greater than or equal to a second threshold.

27. The method of any of claims 20 to 26, wherein the third signaling is uplink control information (UCI), a MAC CE, or RRC signaling.

28. The method of claim 27, wherein the third signaling is a MAC CE or RRC signaling, and transmission of the third signaling to the first network device is determined by the terminal device based on an LCP procedure.

29. The method of claim 28, further comprising:
during the LCP procedure, when an UL resource is an UL resource corresponding to the first network device or an UL resource corresponding to the frequency where the first network device is located, containing, by the terminal device, the third signaling in a MAC PDU.

30. The method of any of claims 20 to 26, wherein the third signaling contains fifth information, and the fifth information indicates a length of an SCell deactivation timer.

31. The method of any of claims 20 to 30, wherein the third signaling contains an index of the one or more SSBs.

32. The method of any of claims 20 to 30, wherein the third signaling is carried on a resource associated with the one or more SSBs.

33. The method of claim 32, wherein the resource associated with the one or more SSBs comprises one or more of: a time-frequency resource, a preamble, or a sequence.

34. The method of any of claims 30 to 33, further comprising:
performing, by the terminal device, one or more of:
stopping or resetting the first timer, wherein the first timer is related to SSB activation of the first network device; or
stopping transmission of the first signaling.

35. A wireless communication method, comprising:
receiving, by a first network device, first signaling sent by a terminal device, wherein the first signaling is used for triggering the first network device to send a first synchronization signal block (SSB).

36. The method of claim 35, wherein the first signaling is triggered based on second signaling or a first reference signal.

37. The method of claim 36, wherein the second signaling comprises one or more of:
secondary cell (SCell) activation signaling; or
signaling for layer 1 (L1)/layer 3 (L3) measurement on the first network device or a frequency where the first network device is located.

38. The method of claim 37, wherein the second signaling is downlink control information (DCI), a medium access control control element (MAC CE), or radio resource control (RRC) signaling.

39. The method of any of claims 35 to 38, wherein the first signaling is carried in a wake-up signal (WUS).

40. The method according to any of claims 35 to 39, further comprising:
sending, by the first network device, configuration information to a second network device; or
receiving, by the first network device, configuration information sent by the second network device,
wherein the configuration information is used to configure the terminal device to send the first signaling to the first network device.

41. The method of claim 40, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

42. The method of claim 41, wherein the resource for the first signaling comprises one or more of: a time-frequency resource, a preamble, or a sequence.

43. The method of claim 41 or 42, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

44. The method of any of claims 4341, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

45. The method of claim 44, wherein in the first resource-selection mode, the resource for the first signaling is selected based on the measurement value of the first target signal and a threshold of the measurement value.

46. The method of any of claims 41 to 45, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

47. The method of claim 46, wherein in the second resource-selection mode, the resource for the first signaling is selected based on one or more of:
a signal with the highest measurement value among second target signals; or
the measurement value of the second target signal and a threshold of the measurement value.

48. The method of any of claims 35 to 47, further comprising:
receiving, by the first network device, third signaling or a second reference signal sent by the terminal device, wherein the third signaling or the second reference signal is used for triggering the first network device to stop transmission of one or more SSBs.

49. The method of claim 48, wherein the third signaling or the second reference signal is triggered based on fourth signaling or a third reference signal.

50. The method of claim 49, wherein the fourth signaling is one of:
SCell deactivation signaling; or
signaling for canceling L1/L3 measurement on the first network device or the frequency where the first network device is located.

51. The method of claim 49, wherein the fourth signaling is DCI, a MAC CE, or RRC signaling.

52. The method of claim 51, wherein the fourth signaling is sent by the first network device or the second network device.

53. The method of claim 48, wherein the third signaling or the second reference signal is triggered based on the measurement value of the first target signal sent by the first network device, and the first target signal comprises an SSB and/or a CSI-RS.

54. The method of any of claims 48 to 53, wherein the third signaling is UL control information (UCI), a MAC CE, or RRC signaling.

55. The method of any of claims 48 to 53, wherein the third signaling contains fifth information, and the fifth information indicates a length of an SCell deactivation timer.

56. The method of claim 55, further comprising:
stopping, by the first network device, transmission of one or more SSBs in response to expiration of the SCell deactivation timer.

57. The method of any of claims 48 to 56, wherein the third signaling contains an index of the one or more SSBs.

58. The method of any of claims 48 to 56, wherein the third signaling is carried on a resource associated with the one or more SSBs.

59. The method of claim 58, wherein the resource associated with the one or more SSBs comprises one or more of: a time-frequency resource, a preamble, or a sequence.

60. A wireless communication method, comprising:
sending, by a second network device, configuration information to a terminal device, wherein the configuration information is used to configure the terminal device to send first signaling to a first network device, and the first signaling is used for triggering the first network device to send a first synchronization signal block (SSB).

61. The method of claim 60, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

62. The method of claim 61, wherein the resource for the first signaling comprises one or more of: a time-frequency resource, a preamble, or a sequence.

63. The method of claim 61 or 62, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

64. The method of any of claims 61 to 63, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

65. The method of claim 64, wherein in the first resource-selection mode, the resource for the first signaling is selected based on the measurement value of the first target signal and a threshold of the measurement value.

66. The method of any of claims 61 to 65, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

67. The method of claim 66, wherein in the second resource-selection mode, the resource for the first signaling is selected based on one or more of:
a signal with the highest measurement value among second target signals; or
the measurement value of the second target signal and a threshold of the measurement value.

68. The method of any of claims 60 to 67, wherein the first signaling is carried in a wake-up signal (WUS).

69. The method of any of claims 60 to 68, further comprising:
sending, by the first network device, the configuration information to the second network device; or
receiving, by the first network device, the configuration information sent by the second network device.

70. The method of any of claims 60 to 69, further comprising:
receiving, by the second network device, first indication information or second indication information sent by the terminal device, wherein the first indication information indicates that activation of the first SSB is successful, and the second indication information indicates that activation of the first SSB failed.

71. The method of any of claims 60 to 70, further comprising:
sending, by the second network device, fourth signaling to the terminal device, wherein the fourth signaling is used for triggering the terminal device to send third signaling or a second reference signal, and the third signaling or the second reference signal is used for triggering the first network device to stop transmission of one or more SSBs.

72. A terminal device, comprising:
a communication unit configured to send first signaling to a first network device, wherein the first signaling is used for triggering the first network device to send a first synchronization signal block (SSB).

73. The terminal device of claim 72, wherein the first signaling is triggered based on second signaling or a first reference signal.

74. The terminal device of claim 73, wherein the second signaling comprises one or more of:
secondary cell (SCell) activation signaling; or
signaling for layer 1 (L1)/layer 3 (L3) measurement on the first network device or a frequency where the first network device is located.

75. The terminal device of claim 73, wherein the second signaling is downlink control information (DCI), a medium access control control element (MAC CE), or radio resource control (RRC) signaling.

76. The terminal device of any of claims 72 to 75, wherein the first signaling is carried in a wake-up signal (WUS).

77. The terminal device of any of claims 72 to 76, wherein the communication unit is further configured to:
receive configuration information sent by a second network device before the terminal device sends the first signaling to the first network device, wherein the configuration information is used to configure the terminal device to send the first signaling to the first network device.

78. The terminal device of claim 77, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

79. The terminal device of claim 78, wherein the resource for the first signaling comprises one or more of: a time-frequency resource, a preamble, or a sequence.

80. The terminal device of claim 78 or 79, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

81. The terminal device of any of claims 78 to 80, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

82. The terminal device of claim 81, wherein in the first resource-selection mode, the resource for the first signaling is selected based on the measurement value of the first target signal and a threshold of the measurement value.

83. The terminal device of any of claims 78 to 82, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

84. The terminal device of claim 83, wherein in the second resource-selection mode, the resource for the first signaling is selected based on one or more of:
a signal with the highest measurement value among second target signals; or
the measurement value of the second target signal and a threshold of the measurement value.

85. The terminal device of any of claims 72 to 84, further comprising:
a starting/stopping unit configured to:
start a first timer in response to transmission of the first signaling; and/or
stop the first timer in response to reception of the first SSB.

86. The terminal device of claim 85, wherein the communication unit is further configured to:
send first indication information to the second network device in response to the first timer being stopped, wherein the first indication information indicates that activation of the first SSB is successful.

87. The terminal device of claim 85, further comprising:
an executing unit configured to perform one or more of the following in response to expiration of the first timer:
sending second indication information to the second network device, wherein the second indication information indicates that activation of the first SSB failed;
deactivating the first network device; or
releasing configuration information for L1/L3 measurement on the first network device or the frequency where the first network device is located.

88. The terminal device of claim 87, wherein transmission of the second indication information to the second network device is determined by the terminal device based on a logical channel prioritization (LCP) procedure.

89. The terminal device of claim 88, further comprising:
a first processing unit configured to: during the LCP procedure, when an uplink (UL) resource is an UL resource corresponding to the second network device or an UL resource corresponding to a frequency where the second network device is located, contain the second indication information in a MAC protocol data unit (MAC PDU).

90. The terminal device of any of claims 72 to 89, further comprising:
a starting unit configured to start an SCell deactivation timer in response to receiving the first SSB.

91. The terminal device of any of claims 72 to 90, wherein the communication unit is further configured to:
send third signaling or a second reference signal to the first network device, wherein the third signaling or the second reference signal is used for triggering the first network device to stop transmission of one or more SSBs.

92. The terminal device of claim 91, wherein the third signaling or the second reference signal is triggered based on fourth signaling or a third reference signal.

93. The terminal device of claim 92, wherein the fourth signaling is one of:
SCell deactivation signaling; or
signaling for canceling L1/L3 measurement on the first network device or the frequency where the first network device is located.

94. The terminal device of claim 92, wherein the fourth signaling is DCI, a MAC CE, or RRC signaling.

95. The terminal device of claim 94, wherein the fourth signaling is sent by the first network device or the second network device.

96. The terminal device of claim 91, wherein the third signaling or the second reference signal is triggered based on the measurement value of the first target signal sent by the first network device, and the first target signal comprises an SSB and/or a CSI-RS.

97. The terminal device of claim 96, wherein the third signaling is triggered when one or more of the following are satisfied:
the measurement value of the first target signal is less than or equal to a first threshold; or
the measurement value of the first target signal is greater than or equal to a second threshold.

98. The terminal device of any of claims 91 to 97, wherein the third signaling is uplink control information (UCI), a MAC CE, or RRC signaling.

99. The terminal device of claim 98, wherein the third signaling is a MAC CE or RRC signaling, and transmission of the third signaling to the first network device is determined by the terminal device based on an LCP procedure.

100. The terminal device of claim 99, further comprising:
a second processing unit configured to: during the LCP procedure, when an UL resource is an UL resource corresponding to the first network device or an UL resource corresponding to the frequency where the first network device is located, contain the third signaling in a MAC PDU.

101. The terminal device of any of claims 91 to 97, wherein the third signaling contains fifth information, and the fifth information indicates a length of an SCell deactivation timer.

102. The terminal device of any of claims 91 to 101, wherein the third signaling contains an index of the one or more SSBs.

103. The terminal device of any of claims 91 to 101, wherein the third signaling is carried on a resource associated with the one or more SSBs.

104. The terminal device of claim 103, wherein the resource associated with the one or more SSBs comprises one or more of: a time-frequency resource, a preamble, or a sequence.

105. The terminal device of any of claims 91 to 104, further comprising:
an executing unit configured to perform one or more of:
stopping or resetting the first timer, wherein the first timer is related to SSB activation of the first network device; or
stopping transmission of the first signaling.

106. A network device, being a first network device and comprising:
a communication unit configured to receive first signaling sent by a terminal device, wherein the first signaling is used for triggering the first network device to send a first synchronization signal block (SSB).

107. The network device of claim 106, wherein the first signaling is triggered based on second signaling or a first reference signal.

108. The network device of claim 107, wherein the second signaling comprises one or more of:
secondary cell (SCell) activation signaling; or
signaling for layer 1 (L1)/layer 3 (L3) measurement on the first network device or a frequency where the first network device is located.

109. The network device of claim 107, wherein the second signaling is downlink control information (DCI), a medium access control control element (MAC CE), or radio resource control (RRC) signaling.

110. The network device of any of claims 106 to 109, wherein the first signaling is carried in a wake-up signal (WUS).

111. The network device of any of claims 106 to 110, wherein the communication unit is further configured to:
send configuration information to a second network device; or
receive configuration information sent by the second network device,
wherein the configuration information is used to configure the terminal device to send the first signaling to the first network device.

112. The network device of claim 111, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

113. The network device of claim 112, wherein the resource for the first signaling comprises one or more of: a time-frequency resource, a preamble, or a sequence.

114. The network device of claim 112 or 113, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

115. The network device of any of claims 112 to 114, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

116. The network device of claim 115, wherein in the first resource-selection mode, the resource for the first signaling is selected based on the measurement value of the first target signal and a threshold of the measurement value.

117. The network device of any of claims 112 to 116, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

118. The network device of claim 117, wherein in the second resource-selection mode, the resource for the first signaling is selected based on one or more of:
a signal with the highest measurement value among second target signals; or
the measurement value of the second target signal and a threshold of the measurement value.

119. The network device of any of claims 106 to 118, wherein the communication unit is further configured to:
receive third signaling or a second reference signal sent by the terminal device, wherein the third signaling or the second reference signal is used for triggering the first network device to stop transmission of one or more SSBs.

120. The network device of claim 119, wherein the third signaling or the second reference signal is triggered based on fourth signaling or a third reference signal.

121. The network device of claim 120, wherein the fourth signaling is one of:
SCell deactivation signaling; or
signaling for canceling L1/L3 measurement on the first network device or the frequency where the first network device is located.

122. The network device of claim 120, wherein the fourth signaling is DCI, a MAC CE, or RRC signaling.

123. The network device of claim 122, wherein the fourth signaling is sent by the first network device or the second network device.

124. The network device of claim 119, wherein the third signaling or the second reference signal is triggered based on the measurement value of the first target signal sent by the first network device, and the first target signal comprises an SSB and/or a CSI-RS.

125. The network device of any of claims 119 to 124, wherein the third signaling is uplink control information (UCI), a MAC CE, or RRC signaling.

126. The network device of any of claims 119 to 124, wherein the third signaling contains fifth information, and the fifth information indicates a length of an SCell deactivation timer.

127. The network device of claim 126, wherein the communication unit is further configured to:
stop transmission of one or more SSBs in response to expiration of the SCell deactivation timer.

128. The network device of any of claims 119 to 127, wherein the third signaling contains an index of the one or more SSBs.

129. The network device of any of claims 119 to 127, wherein the third signaling is carried on a resource associated with the one or more SSBs.

130. The network device of claim 129, wherein the resource associated with the one or more SSBs comprises one or more of: a time-frequency resource, a preamble, or a sequence.

131. A network device, being a second network device and comprising:
a communication unit configured to send configuration information to a terminal device, wherein the configuration information is used to configure the terminal device to send first signaling to a first network device, and the first signaling is used for triggering the first network device to send a first synchronization signal block (SSB).

132. The network device of claim 131, wherein the configuration information comprises one or more of:
first information indicating the frequency where the first network device is located;
second information indicating a resource for the first signaling;
third information indicating a time offset between the first network device and the second network device; or
fourth information indicating a resource-selection mode for the first signaling.

133. The network device of claim 132, wherein the resource for the first signaling comprises one or more of: a time-frequency resource, a preamble, or a sequence.

134. The network device of claim 132 or 133, wherein the third information comprises one or more of:
a system frame number (SFN) offset between the first network device and the second network device;
a slot offset between the first network device and the second network device;
a symbol offset between the first network device and the second network device; or
a time-domain resource location for the first signaling determined based on timing of the second network device.

135. The network device of any of claims 132 to 134, wherein the fourth information indicates a first resource-selection mode, wherein in the first resource-selection mode, the resource for the first signaling is selected based on a measurement value of a first target signal sent by the first network device, and the first target signal comprises an SSB and/or a channel state information reference signal (CSI-RS).

136. The network device of claim 135, wherein in the first resource-selection mode, the resource for the first signaling is selected based on the measurement value of the first target signal and a threshold of the measurement value.

137. The network device of any of claims 132 to 136, wherein the fourth information indicates a second resource-selection mode, wherein in the second resource-selection mode, the resource for the first signaling is selected based on a measurement value of a second target signal sent by the second network device, and the second target signal comprises an SSB and/or a CSI-RS.

138. The network device of claim 137, wherein in the second resource-selection mode, the resource for the first signaling is selected based on one or more of:
a signal with the highest measurement value among second target signals; or
the measurement value of the second target signal and a threshold of the measurement value.

139. The network device of any of claims 131 to 138, wherein the first signaling is carried in a wake-up signal (WUS).

140. The network device of any of claims 131 to 139, wherein the communication unit is further configured to:
send the configuration information to the second network device; or
receive the configuration information sent by the second network device.

141. The network device of any of claims 131 to 140, wherein the communication unit is further configured to:
receive first indication information or second indication information sent by the terminal device, wherein the first indication information indicates that activation of the first SSB is successful, and the second indication information indicates that activation of the first SSB failed.

142. The network device of any of claims 131 to 141, wherein the communication unit is further configured to:
send fourth signaling to the terminal device, wherein the fourth signaling is used for triggering the terminal device to send third signaling or a second reference signal, and the third signaling or the second reference signal is used for triggering the first network device to stop transmission of one or more SSBs.

143. A terminal device, comprising:
a transceiver;
a memory configured to store programs; and
a processor configured to invoke the programs from the memory and control the transceiver to perform signal reception and transmission, to cause a communication device to perform the method of any of claims 1 to 34.

144. A network device, comprising:
a transceiver;
a memory configured to store programs; and
a processor configured to invoke the programs from the memory and control the transceiver to perform signal reception and transmission, to cause a communication device to perform the method of any of claims 35 to 59 or 60 to 71.

145. An apparatus, comprising:
a processor configured to invoke programs from a memory, to cause the apparatus to perform the method of any of claims 1 to 34, 35 to 59, or 60 to 71.

146. A chip, comprising:
a processor configured to invoke programs from a memory, to cause a device equipped with the chip to perform the method of any of claims 1 to 34, 35 to 59, or 60 to 71.

147. A computer-readable storage medium, configured to store programs which are operable with a computer to perform the method of any of claims 1 to 34, 35 to 59, or 60 to 71.

148. A computer program product, comprising programs which are operable with a computer to perform the method of any of claims 1 to 34, 35 to 59, or 60 to 71.

149. A computer program, being operable with a computer to perform the method of any of claims 1 to 34, 35 to 59, or 60 to 71.
